# EUROPEAN PATENT APPLICATION

(11) **EP 1 055 471 A1**
(43) Date of publication of application: **29.11.2000**
(21) Application number: 00110598.0
(22) Date of filing: 18.05.2000
(51) Int. Cl.: B23B 13/02

(54) **Bar feeding device for machine tools**

(30) Priority: 26.05.1999 IT MI991167
(71) Applicant: CUCCHI GIOVANNI & C. S.r.l., I-20060 Bussero Milano (IT)
(72) Inventor: Cucchi, Giovanni, 20060 Bussero (MI) (IT)
(74) Representative: Coloberti, Luigi

(57) **Abstract**

The bar feeding device for machine tools comprises a plurality of carriages (11, 12) movable along longitudinal guides (13) for supporting a main bar pushing member (15) and a bar (14) which must be fed towards a spindle of the machine tool. The pushing member (15) is supported, by vertically movable sliders (40), between a lowered position for alignment with the spindle of the machine tool, and a raised position for charging a new bar (14). A vertically movable bar loading device (18-26), provided on a side of the feeding device, comprises a rear cradle (26) and a plurality of fork shaped bar-support elements (27) underneath the bar pushing member (15) and the bar guide carriages (11, 12). The pushing member (14), is disengageably connectable to the cradle (26) to be sequentially raised and lowered with the same.

## Description

### BACKGROUND OF THE INVENTION

The present invention relates to a bar feeder for machine tools, and more precisely to a bar feeder for single-spindle lathe machine, of the type comprising a frame defining a longitudinal axis aligned with a spindle of the machine tool, and a plurality of carriages movable along horizontal guides parallely arranged to said longitudinal axis so as to rotatably support a bar which must be fed and guided towards the spindle and in which a bar pushing member performs the stepwise feeding movement of the bar towards and along the spindle of the machine.

Automatic feeders of this kind are described, for example, in GB-A-2,080,160, US-A-5,066,185 and EP-A-0 559 094. In the case of the feeder according to GB-A-2,080,160 at the loading of a new bar, the bar pushing member must be entirely retracted beyond a loading device so as not interfere with the new bar to be loaded in the machine tool. Solutions of this kind result in considerable lengthwise dimensions of the whole feeder, since the length of the bar pushing member, which is normally of the order of a few metres, must be added to the length of the bar.

For this reason, bar feeders of this kind generally have a considerable length; since a reduction in the overall dimensions is of particular relevancy for these types of machines in order to make more efficient use of the working areas, US-A-5,066,185 and EP-A-0 559 094 have proposed the reduce the lengthwise dimensions of the feeder machine by arranging the bar pushing member on one side of the feeder frame, in a position separate from the bar loading device; in both cases, both the bar pushing member and the loading device are provided with respective control means so as to be independently moved, in mutually perpendicular directions or opposite directions, transversely to the longitudinal axis of the machine.

However, a lateral arrangement of the bar pushing member, operatively separate from the bar loading device, in addition to the provision of separate control means independent of each other, still results in a bulky and complex design of the entire loading device, which is unsuitable for use with machine tools intended to operate at high speeds, where the operations involving removal of the bar sections at the end of machining, and loading of a new bar to be machined, result in idle times which are considered to be excessively long and which have a significant negative effect on productivity of the machine. Moreover, in the loading device according to the patent US-A-5,066,185, which represents the closest prior art, the rear carriage which is firstly operated to feed a bar towards the spindle of a machine tool to which such a feeder is operationally connected, must initially perform a first working stroke in order to introduce the bar into the spindle of the machine tool, followed by a second working stroke to advance a first section of the said bar; a bar pushing member is then operated to pass through the whole series of carriages and to push forwards the bar to be machined.

Such a solution, in addition to causing an interruption in the working cycle of the machine-tool, owing to the need to stop the machine when the pushing member must operate in substitution of the rear carriage, also results in limitations in the diameter of the bars to be fed, said diameter substantially corresponding to or being slightly greater than the diameter of the same pushing member used to advance the bars. Moreover, the bars to be machined, during the final portion of their forwards stroke are not supported in any way at their ends; this often results in the risk of eccentric rotation of the bar and generation of knocking and noise.

### OBJECTS OF THE INVENTION

Therefore, the main object of the present invention is to provide a bar feeder for machine tools, of the carriage type, which has extremely compact dimensions and results in shorter bar loading times, thus being particularly suitable for use with high-speed machine tools.

Yet another object of the present invention is to provide a bar feeder as defined above, which is both constructionally simple and such that it allows the feeding of bars having different diameters or a different cross-sectional shape, while always keeping the bar perfectly guided and supported during the whole of its stroke.

A further object of the invention is to provide a bar feeder of the kind mentioned above, in which the displacements of the bar pushing member and the bar loading device, with respect to a position aligned with the longitudinal axis of the same feeder, may be sequentially performed, in a mutually related manner, using a single control means.

Yet another object of the present invention is to provide a bar feeder, as defined above, in which the individual bar guide carriages in addition to rotatably support the bars, also provide a self-centring action on the same rapidly rotating bars, thereby reducing the noise problems caused by the vibration of the rapidly rotating bars, which is typical for bar feeders of conventional type.

### BRIEF DESCRIPTION OF THE INVENTION

The above may be achieved by means of a bar feeding device for machine tools according to Claim 1.

More particularly, the invention provides a bar feeding device for a machine tool, comprising:
- a frame defining a longitudinal axis aligned with a spindle of the machine tool;
- a plurality of bar supporting carriages movable along horizontal guides parallely extending to the longitudinal axis of the feeding device, said plurality of bar supporting carriages comprising:
- a first set of fore carriages; each carriage being provided with a bar supporting member for rotatably supporting and guiding a bar to be fed into the spindle of the machine-tool;
- and a second set of rear carriages for supporting a first bar pushing member to advance the bar along the spindle of the machine-tool; and
- a bar loading device for loading the individual bars into the bar supporting members of said first set of carriages;
   characterized in that:
- each carriage of said second set comprises a slider for movably supporting said first bar pushing member along vertical slide guides, first drive means being provided for simultaneously moving the slides and the bar pushing member between a first lowered position, in which the bar pushing member is axially aligned to the spindle of the machine-tool, and a raised position with respect to the longitudinal axis of the feeding device;
- in that the bar loading device comprises a bar loading cradle longitudinally extending beneath the first bar pushing member, and a second bar pushing member movably supported along the loading cradle to introduce a bar into the supporting member of the fore carriages; and
- a plurality of fork shaped member to support the bar forward the cradle of the loading device, there also being provided second drive means for vertically moving the cradle and fork shaped members between a lowered bar-receiving position and a raised position in which the bar is axially aligned with the bar supporting members of the fore carriages and the spindle of the machine-tool;
- and in that said first bar pushing member, in a retracted position, is disengageably connected to the loading cradle to be selectively raised and lowered by the same.

According to a preferred embodiment, the raising movement of the first pushing member, when a new bar is to be loaded into the fore carriages, is performed by providing a sliding connection between the pushing member and the cradle to allow an upward movement of the same pushing member causing a delayed raising thereof.

According to a further feature of the invention, each of the fore carriages is provided with a bar support device of the self-centring type, which can be angularly oriented to rotatably support bars having different diameters and/or different cross-sectional shapes.

### BRIEF DESCRIPTION OF THE DRAWINGS

These and further features of the invention will emerge more clearly from the following description, with reference to the accompanying drawings, in which:
- Fig. 1 is a perspective view of the bar feeder in which the most important functional parts are schematically shown;
- Fig. 2 is a top view of the feeder according to Figure 1;
- Fig. 3 shows a detail of the bar loading device;
- Fig. 4 shows a view of an automatic device for connecting drive chains to the forward carriage supporting a first pushing member, in an engaged condition;
- Fig. 5 shows a side view of the automatic device of Figure 4, in a disengaged condition;
- Fig. 6 shows an enlarged view of the rear end of the feeder of Figure 1;
- Fig. 7 is a cross-sectional view along the line 7-7 of Figure 1;
- Fig. 8 is a cross-sectional view of one of the fore carriages along the line 8-8 of Figure 1;
- Figs. 9 to 13 schematically show operating conditions of the guide carriages, the pushing member and the automatic bar loading unit.

### DETAILED DESCRIPTION OF THE INVENTION

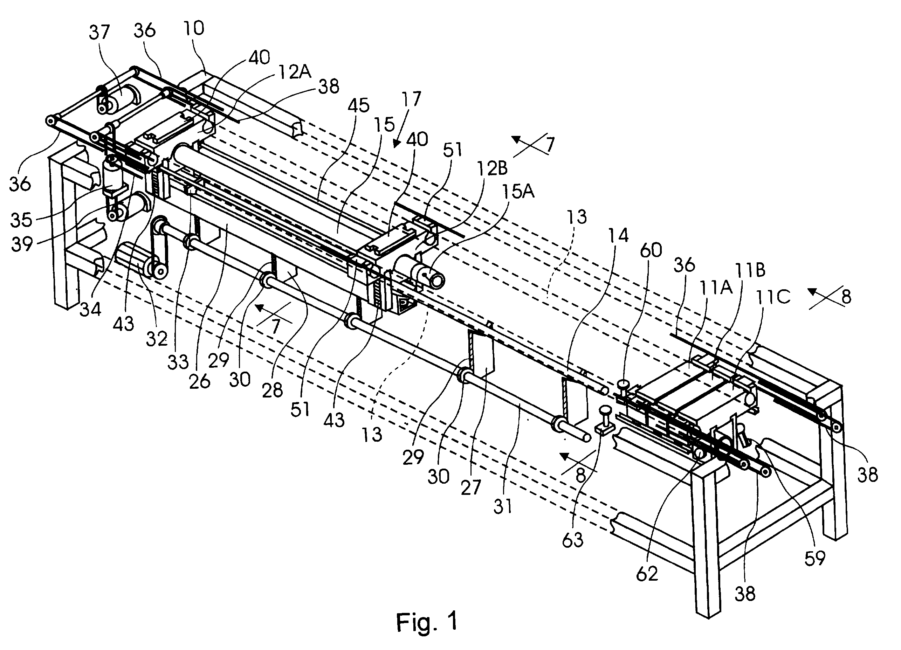

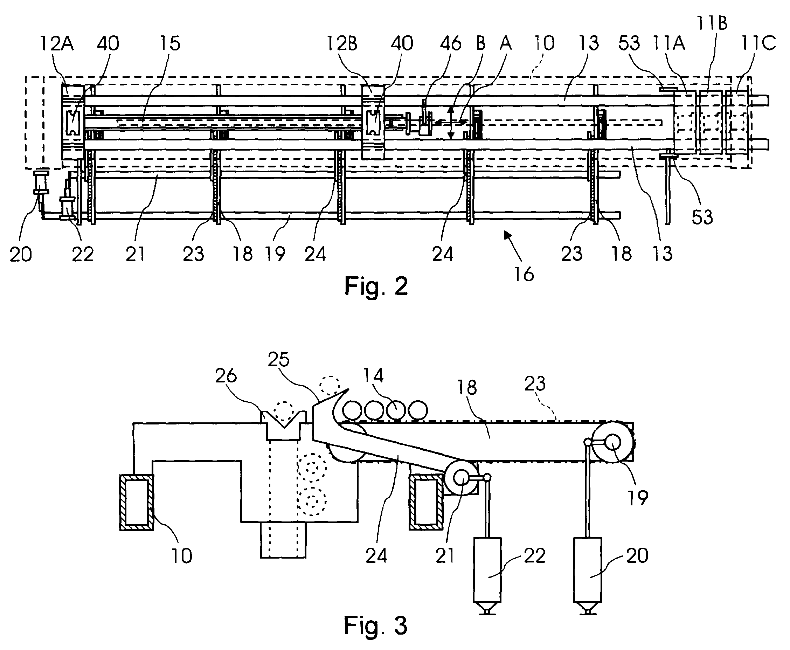

As shown in Figures 1 and 2, a bar feeding device according to the invention, particularly suitable for single-spindle machine tools, comprises a horizontal frame 10 defining a longitudinal axis aligned with a spindle of a machine tool.

The feeding device also comprises a plurality of carriages 11A, 11B, 11C and 12A, 12B movable along guides 13 which extend parallel to the longitudinal axis of the feeder, between the rear and the front end of the frame 10.

More precisely, the plurality of carriages comprises a first set of fore carriages 11A, 11B and 11C for rotatably supporting a bar 14 which must be fed and guided towards the spindle of the machine-tool.

The feeder also comprises a second set of rear carriages 12A, 12B for supporting a first bar pushing member 15, substantially consisting of a long tubular rod fixedly connected to the carriage 12A, and slidably supported by the carriage 12B of the rear set; the pushing member 15 is provided at the front end with a rotating gripping member 15A in which is seated the rear end of a bar 14 to be fed into the spindle of the machine tool.

The bar feeding device is also provided, on one side thereof, with a bar store 16 and an automatic bar loading device 17, which extend from the rear end and practically over the whole length of the frame 10.

The automatic bar loading device 17 extends longitudinally below the bar-pushing member 15 and the guides 13 for the carriages.

More precisely, the bar store 16 consists of a plurality of rectangular plates 18 which protrude laterally from one side of the frame 10, to support a first shaft 19 actuated so as to angularly reciprocate by an actuating cylinder 20, and a second shaft 21 actuated so as to angularly reciprocate by a cylinder 22.

Each plate 18 is provided, on one side, with an endless chain 23 which is wound around toothed wheels, one of which is connected to the shaft 19 so as to step feed the individual bars 14 to be machined towards a front stop.

Each plate 18 is also provided with a reciprocating arm 24 which is connected to the shaft 21 and which is provided, at its front end, with a downwardly slanted edge 25 for removing a single bar 14 from the bar store 16, raising it until it falls into a bar receiving cradle 26 of the automatic loading device 17.

The automatic loading device 17 in turn comprises an elongated cradle 26 which extends underneath the carriage guides 13 and the bar pushing member 15 when the latter is in the retracted position shown in Figure 1; the loading device 17 also comprises a plurality of axially spaced fork-shaped elements 27 for supporting a bar 14 forward the cradle 26.

The cradle 26 and the bar support elements 27 are conjointly movable between a lowered bar receiving position, shown in Figure 3, and a raised position for introduction of the bar 14 into the set of fore carriages 11A-11C, where the bar 14 is axially aligned with the spindle of a machine tool.

In this connection, the cradle 26 is movably supported by a plurality of plates 28 which, in the same manner as the fork-shaped elements 27, are suitably guided during their vertical movement, for example by means of lateral rollers or guides, not shown, and are also provided along one of their longitudinal edges with a rack 29 engaging with a respective pinion 30 fastened to an actuating shaft 31 connected to an electric motor 32 or other suitable operating means.

The cradle 26 which, in the same manner as the support elements 27 has a V-shaped upper channel, is provided with a second bar pushing member 33 which can be actuated so as to move along the channel of the cradle 26 for example by means of an endless chain 34 connected to an associated actuating motor 35.

From Figure 1 it can also be seen that the carriages 11A, 11B and 11C are actuated so as to move along the guides 13 by means of a drive system comprising chains 36 actuated by an associated electric motor 37.

In turn, the two carriages 12A, 12B which support the main pushing member 15, are connected to an associated chain drive system 38 operated by a respective electric motor 39.

The electric motors 37 and 39 which control the movements of the carriages 11A-11C and 12A, 12B are connected to or provided with an associated reference signal generator or encoder for controlling at all times the feeding movement and position of the said carriages, pushing member 15 and consequently the bar 14 while it is fed to the machine-tool.

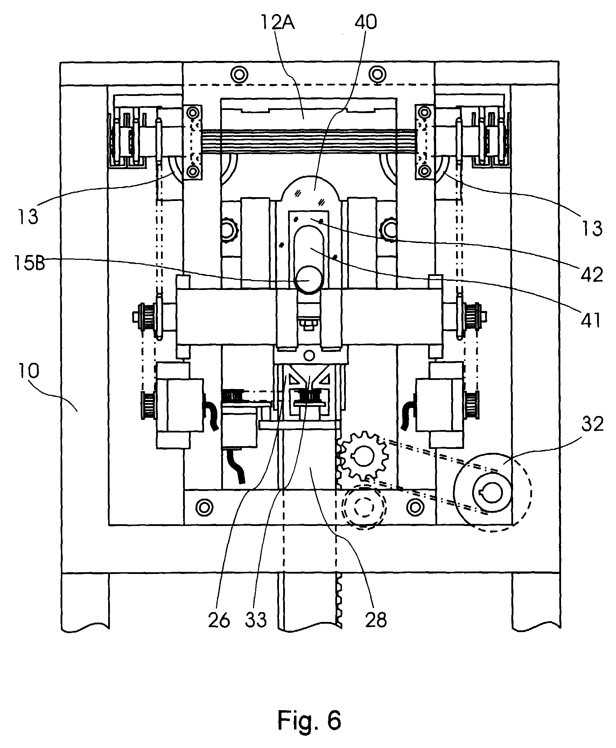

Figure 6 in the accompanying drawings shows, in greater detail, the rear end of the feeding device and the arrangement of the various control motors, reference-signal generators and drive chains respectively for the bar receiving cradle 26 and the associated parts.

As mentioned above, the pushing member 15 is supported by the carriages 12A, 12B for forwards and backwards horizontal movements, along the longitudinal axis of the bar feeding device, as well as for a vertical raising and lowering movement which is co-related and in sequence with the raising and lowering movements of the cradle 26 of the bar loading device 17.

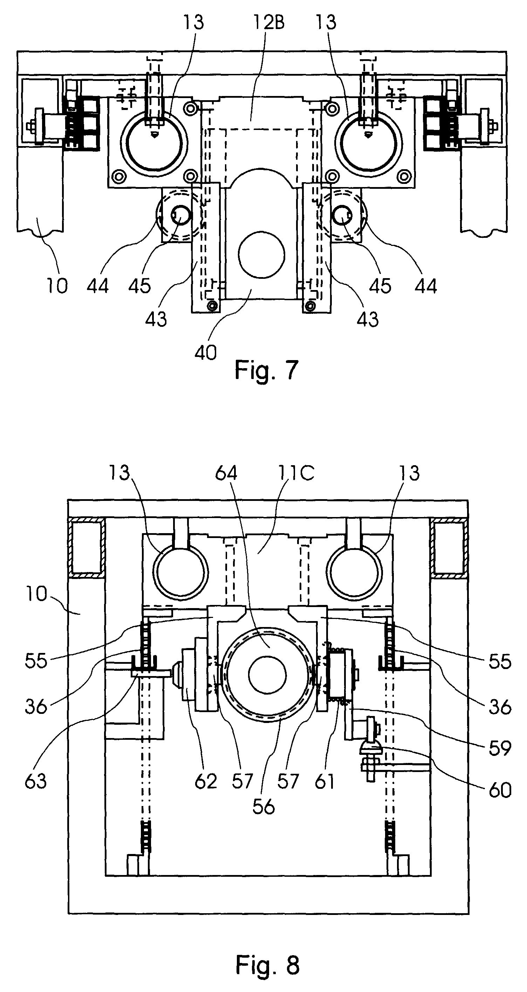

In this connection, as shown in Figure 1 and in the enlarged details of Figures 6 and 7, both carriages 12A and 12B of the second set supporting the pushing member 15 are provided with a slider 40 movable along vertical guides provided on the two sides of each carriage.

The pushing member 15 is fastened to the slider 40 of the rear carriage 12A, while it is axially movable in respect of the slider 40 of the front carriage 12B, so as to allow pushing of a bar 14 during the final portion of its feeding stroke towards the spindle of the machine-tool.

The raising and lowering movements of the two sliders 40 with the bar pushing member 15 are achieved in a controlled manner, in sequence with the raising and lowering movements of the cradle 26, using the movement of the latter in order to obtain a simultaneous or delayed raising and lowering movement of the pushing member 15; this is obtained by providing the cradle 26 or part associated therewith, and the pushing member 15 or the support slider associated with the rear carriage 12A, with engageable and disengageable connecting members which can be engaged and disengaged each other by means of the forward and rearward movements of the pushing member 15 and the associated support carriages 12A, 12B in the direction of the longitudinal axis of the bar feeding device, when the said pushing member 15 is in its retracted position as shown; these connecting members are also designed to allow, if necessary, a relative movement between the pushing member 15 and the cradle 26 during their raising and lowering movements.

In this connection, as shown in Figure 6, the pushing member 15 terminates, at the rear end, with a tail or protrusion 15B which passes through a vertically extending or elongated slot 41 provided in a plate 42 fixed to the bar receiving cradle 26; in this way the raising movement of the cradle 26, after a short upwards travel movement, causes a simultaneous raising movement of the pushing member 15; lowering of the cradle 26 immediately causes simultaneous lowering of the pushing member 15 until the latter is aligned with a bar 14 to be fed, the cradle 26 alone then continuing its downward movement.

In turn, the two sliders 40 of the carriages 12A and 12B are connected together by means of a rack-type transmission system which allows simultaneous raising and lowering movements of the sliders 40, while keeping the pushing member 15 always parallel to the longitudinal axis of the machine.

More precisely, as shown in Figure 1 and in Figure 7 of the accompanying drawings, each slider 40 has, on opposite sides, a vertical rack 43 each of which engages with a toothed wheel 44 fixed to a transmission shaft 45 which extends between the two carriages 12A and 12B so as to perform jointly the raising and lowering movements of the two sliders 40, allowing a relative sliding movement of the carriage 12A so that it may be moved towards and away from the carriage 12B.

Two limit switches, not shown, which are adjustable heightwise and actuated by the cradle 26, allow to define and change the raising and lowering positions of the said cradle 26 and, consequently, of the sliders 40 with the pushing member 15.

In front of the cradle 26 there is provided a bar gripping device 46 for temporarily retaining the rear end of a bar after it has been disposed into the carriages 11A, 11B, 11C, as explained further below, and for removing the crop end of a bar at the end of the machining. The gripping device 46 performs a movement along two mutually perpendicular axes, parallel to the longitudinal axis of the machine, in the direction of the double arrow A, and transversely with respect to the abovementioned axis, in the direction of the double arrow B; for example, the bar gripping device 46 could be fixed to a reciprocating arm able to angularly rotate towards the bar 14 about a horizontal axis, also being supported by a slider movable on guides in the direction of the double arrow A, i.e. parallel to the longitudinal axis of the bar feeding device; suitable actuating cylinders may perform movement of the arm of the gripping device 46 and the slider in the corresponding directions.

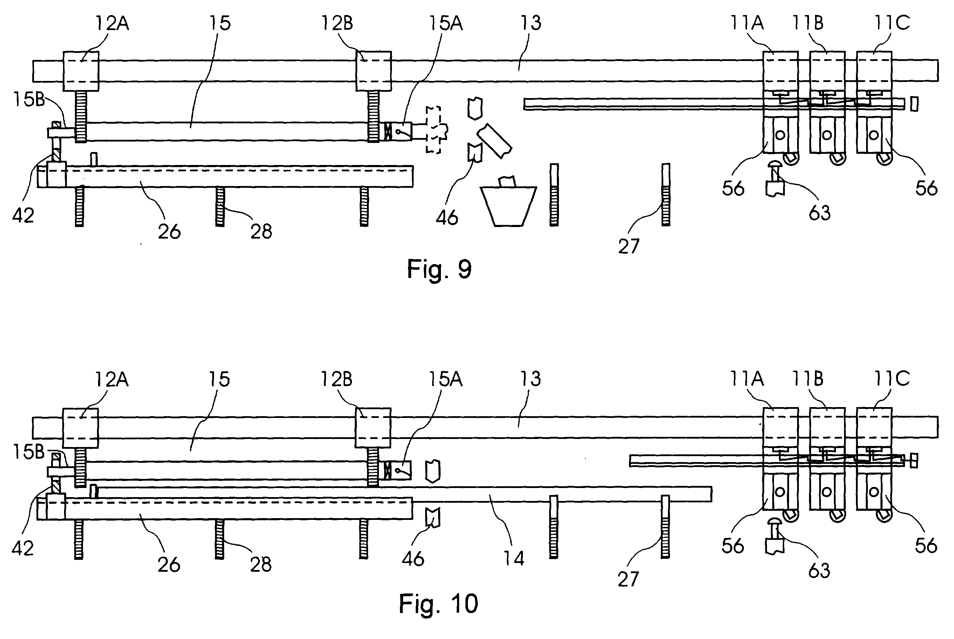

As mentioned above, the two carriages 12A and 12B which support the pushing member 15 are connected to the drive chains 38, so as to move forwards simultaneously, maintaining initially a predefined space between each others during feeding of most of a bar length, until the carriage 12B arrives in the vicinity of the rear carriage 11A of the first set of carriages, after all of the latter have moved forwards into the condition next to one another shown in Figure 1, and as explained further below with reference to Figures 9 to 13.

In order to allow a further forward movement of the rear carriage 12A, for introduction of the pushing member 15 together with a bar 14 into the carriages 11A, 11B, 11C at the front end of the feeding device, and towards the spindle of the machine-tool, while keeping the carriage 12B stationary, the latter is connected to each drive chain 38 by means of a coupling device which can be automatically engaged and disengaged.

Therefore, as shown in Figure 1, on each side of the front carriage 12B which supports the pushing member 15, a chain hooking device 51 has been provided, said hooking device automatically engaging and disengaging a chain 38 in the manner explained hereinbelow.

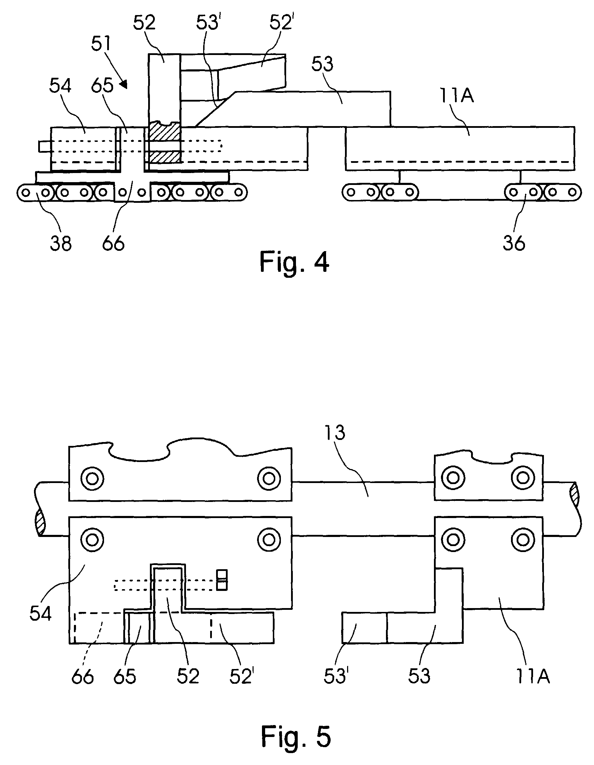

In particular, as shown in Figures 4 and 5, the automatic hooking device 51 comprises a cam member 52, for example provided with a wedged cam surface 52'', intended to contact with a projection 53 at the rear side of the carriage 11A in turn provided with wedged or slanted surface 53' at its end. The cam member 52 is pivoted to side extension 54 of the carriage 12B, to rotate about a pivoting axis parallely to the chain 38.

When the carriage 12B supporting the pushing member 15 is moved forwards, the cam member 52 comes into contact with the projection 53 which causes rotation of the same cam member 52, pivoting it upwards about an axis of rotation; in this way the hooking device 51 on each side of the carriage 12B is disengaged from the chain 38 which instead remains connected to the rear carriage 12A allowing the latter to continue its forwards travel movement so that the main pushing member 15 axially slides in respect to the slider of the front carriage 12B which is now retained against the carriage 11A; alternatively, when the rear carriage 12A and the pushing member 15 must be retracted, the chains 38 initially freely move with respect to the carriage 12B which remains stationary until the projection 65 of a coupling member connected to the chain 38, encounters a shoulder 66 of the hooking device 51, drawing the carriage 12B backwards. When the carriage is moved away from the projection 53, the cam member 52, which was kept raised against a stop 57, under its own weight rotates and falls downwards on the opposite side of the projection 65, as shown in Figure 5.

As initially mentioned, the carriages 11A, 11B, 11C, which support the bar 14 must allow a free rotation of the bar 14, while keeping it perfectly centred with respect to the spindle of the machine-tool; this may be achieved using a self-centring support device on each carriage 11A, 11B, 11C which can be suitably oriented angularly so as to conform to bars having different diameters or different cross-section shapes.

The above may be understood more fully with reference to Figures 7 and 8 of the accompanying drawings in which Figures 7 shows a cross-sectional view of any one of the three carriages 11A, 11B, 11C, for example the carriage 11C.

As shown, the carriage 11C, in a similar manner to the other carriages 11A, 11B, is provided at the front side with two brackets 55 which support a bush 56 provided with two side pivot pins 57 defining an axis of rotation.

One of the two pivot pins is connected to an actuating lever 59 which is actuated to rotate by a first striker element 60 provided along the travel path of the said carriages, so as to angularly rotate the bush member 56 at the end of the forwards stroke, aligning it with the longitudinal axis of the bar feeding device, to allow the pushing member 15 to pass through.

The lever 59, in turn, is biased by a spring 61 so as to rotate in the opposite direction and cause the bush member 56 to return into an angular position where its longitudinal axis forms a predefined angle with the longitudinal axis of the bar feeding device.

The other pivot pin 57 is connectable to an automatic locking device, for example of the type shown in EP-A-0 689 890 in the name of the same applicant filed on May 31, 1995, so as to retain and release automatically the bush 56 in an angular position which can be suitably adjusted according to the diameter of the bar 14 to be guided.

The disengagement of the pivot pin 57 from the locking device 62 is allowed by a second striker element 63 on the opposite side of the carriage guide.

Inside the bush 56 a bearing 64, or an annularly-shaped element of elastically yielding plastic material is provided, which makes direct contact on two axially spaced apart contact point at the upper and bottom sides of the bar 14 in the angular disposition of said bush 56, thus allowing a self-centring action on the rapidly rotating bar 14.

Figures 9 to 13 schematically show, by way of example, the main movement steps of the carriages, the bar loading device and the pushing members both during a loading operation of a new bar and during feeding of the bar towards the machine-tool. Therefore, in these figures the same reference numbers as in the previous figures have been used to indicate similar or equivalent parts.

In brief, Figure 9 shows the condition of the first set of carriages 11A, 11B, 11C guiding a bar and the second set of carriages 12A, 12B and the pushing member 15 in the totally retracted and lowered position, in alignment with the bushes 56 of the carriages 11A, 11B or 11C which, in turn, are at the fully forwards position, at the end of a working, when a new bar must be charged into the machine-tool.

The cradle 26 and the bar support elements 27 of the automatic loader are in turn in their lowered position as shown in Figure 3, ready to receive a new bar 14. In the meantime, the crop end inside the gripper 15A of the pushing member 15 is removed by the gripping device 46 and discharged into a suitable hopper.

At this point, by actuating the arms 24 of the bar loading device, a bar 14 from the store 16 is raised and made to fall into the cradle 26 and onto the front support devices 27. This condition is shown in Figure 10 where it can also be seen that the position of carriages 12A, 12B and 11A, 11B, 11C is unchanged with respect to Figure 9; similarly, the bushes 56 remain in the horizontal position aligned with the spindle of the machine-tool.

In Figure 10 it can be noted, however, that, following loading of a new bar 14, the cradle 26 and the bar support devices 27 have been raised to bring the bar 14 into alignment with the longitudinal axis of the feeding device and the guide bushes 56. This is possible since vertical raising of the cradle 26, by means of the rear plate 42, tail piece 15B of the pushing member 15 and the rack-type connection system, have caused raising of the pushing member 15, moving it away from the longitudinal axis of the feeding device.

The raising and lowering movements of the cradle 26 and the upper pushing member 15 could be simultaneous, by providing a connection between the plate 42 and the tail piece 15B of the pushing member 15 so as to prevent relative movements in the vertical direction. However, it is preferable for the raising movement of the pushing member 15 to be less than the raising movement of the cradle 26 and for it to occur after a short upwards travel movement of the cradle, said movement, however, simultaneous occurring during the downwards movement. As a result, it is possible to reduce the loading time of the bars and, at the same time, perform the necessary adjustments for correct positioning of the bar 14 and alignment of the pushing member 15.

Once the new bar 14 has been raised and aligned with the guide bushes of the carriages 11A, 11B, 11C, as shown in Figure 10, the second pushing member 33 of the bar receiving cradle 26 is actuated, causing the bar 14 to be fed through the bushes 56 until it comes to a standstill condition against a front stop, i.e. in a position defined by an electronic control unit which receives the reference signals from the various encoders and which is suitably programmed to manage the entire operating cycle of the bar feeding device.

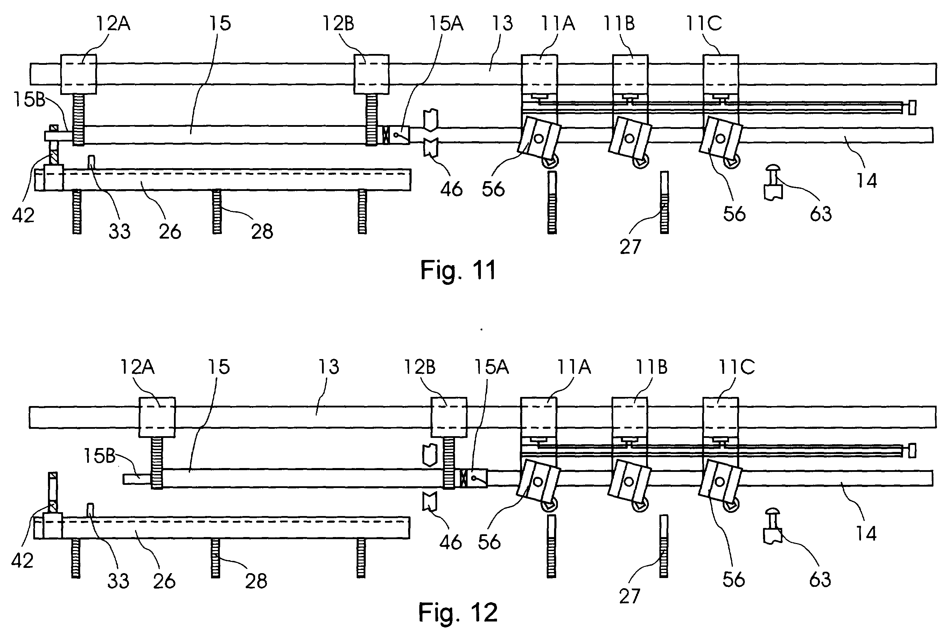

After the gripping device 46 has inserted the rear end of the bar 14 into the gripper 15A of the pushing member 15, the jaws of the device 46 are opened and simultaneously the carriages 11A, 11B, 11C are retracted into the condition shown in Figures 11 and 12, so as to allow the guiding and feeding of the bar 14 along the machine-tool spindle; when the carriages 11A, 11B, 11C are retracted, the striker 63 disengages sequentially the busher 56 from the locking device, which bushes owing to the biasing force of the spring 61 now assume their angularly oriented position shown in Figures 10 and 12, suitably supporting the bar 14 and keeping it in the self-centred condition.

At this point it is possible to move forwards the two carriages 12A and 12B with the pushing member 15, so as to feed a length of bar 14 through the spindle of the machine tool, depending on working requirements. This condition of the feeding device is again shown in Figures 11 and 12 of the accompanying drawings.

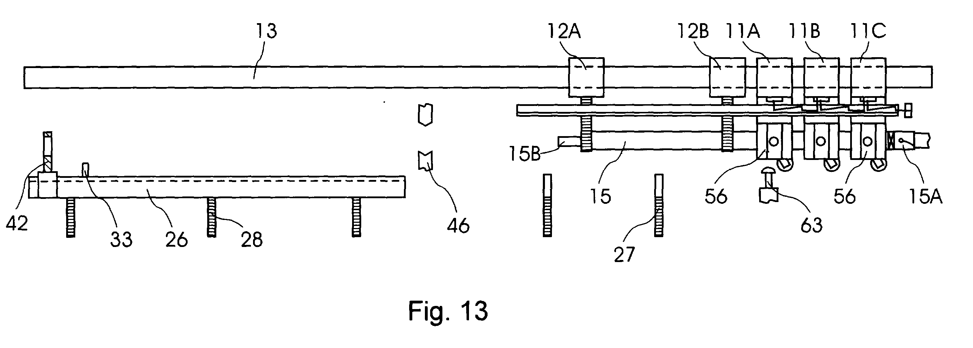

When the front carriage 12B of the second set arrives in the vicinity of the first carriage 11A of the first set, its automatic chain hooking devices 62 disengage the two drive chains 38, thus allowing final forwards movement of the rear carriage 12A with the pushing member 15, while the front carriage 12B remains stationary against the carriages 11A-11C in the approached condition. This condition is shown in Figure 13 of the accompanying drawings.

When feeding of a bar has been completed, the commands for the carriages are reversed, causing them to assume again the condition shown in Figure 9 before starting a new cycle for loading and feeding a new bar to be machined.

From what has been said and shown in the accompanying drawings it will therefore be obvious that a bar feeder for single-spindle machine tools has been provided, said feeder being designed to provide an alternative solution to the previously known bar feeders, which is constructionally and functionally simpler and particularly suitable for high-speed machine tools in that it allows the time for loading of a new bar to be reduced, while maintaining small overall dimensions and self-centring characteristics for different-size bars.

It is understood, however, that that which has been stated and shown with reference to the accompanying drawings has been provided by way of an example of a preferred embodiment; therefore, other modifications or variations may be made to the various parts of the feeder, with regard to the form and dimensions of the various components or various operating means, without departing from the scope of that which is claimed.

## Claims

1. Bar feeding device for a machine tool, comprising:
- a frame (10) defining a longitudinal axis aligned with a spindle of the machine tool;
- a plurality of bar supporting carriages (11, 12) movable along horizontal guides (13) parallely extending to the longitudinal axis of the feeding device, said plurality of bar supporting carriages (11, 12) comprising:
- a first set of fore carriages (11A, 11B, 11C) ; each carriage being provided with a bar supporting member (56) for rotatably supporting and guiding a bar (14) to be fed into the spindle of the machine-tool;
- a second set of rear carriages (12A, 12B) for supporting a first bar pushing member (15) to advance the bar (14) along the spindle of the machine-tool; and
- a bar loading device (18, 26) for loading the individual bars (14) into the bar supporting members of said first set of carriages (11A, 11B, 11C);
characterized in that:
- each carriage of said second set (12A, 12B) comprises a slider (40) for movably supporting said first bar pushing member (15) along vertical slide guides, first drive means (43, 45) being provided for simultaneously moving the sliders (40) and the bar pushing member (15) between a first lowered position, in which the bar pushing member (15) is axially aligned to the spindle of the machine-tool, and a raised position with respect to the longitudinal axis of the feeding device;
- in that the bar loading device (18, 26) comprises a bar loading cradle (26) longitudinally extending beneath the first bar pushing member (15), and a second bar pushing member (33) movably supported along the loading cradle (26) to introduce a bar (14) into the supporting members (56) of the fore carriages (11A, 11B, 11C); and
- a plurality of fork shaped members (27) to support the bar (14) forward the cradle (26) of the loading device (18, 26), there also being provided second drive means (30, 32) for vertically moving the cradle (26) and fork shaped members (27) between a lowered bar-receiving position and a raised position in which the bar (14) is axially aligned with the bar supporting members (56) of the fore carriages (11A, 11B, 11C) and the spindle of the machine-tool;
- and in that said first bar pushing member (15), in a retracted position, is disengageably connected to the loading cradle (26) to be selectively raised and lowered by the same.

2. Bar feeding device according to Claim 1, characterized in that the bar loading device (18, 26) and the first bar pushing member (15), or their associated parts, comprise engageable and disengageable connection means (15B, 42) which can be engaged and disengaged by an axial sliding movement, into the retracted position of the abovementioned pushing member (15).

3. Bar feeding device according to Claim 2, characterized in that said connection means (15B, 42) are relatively movable in a vertical direction during raising and lowering of the bar loading device (18-27) in respect to the pushing member (15).

4. Bar feeding device according to Claims 2 and 3, characterized in that said connection means comprise a connection plate (42) provided with an elongated hole (41) in the vertical direction, said connection plate (42) being fastened to the bar receiving cradle (26), said first bar pushing member (15) comprising a rear protrusion (15B) to penetrate into the elongated hole (41) of the connecting plate (42).

5. Bar feeding device according to Claim 1, characterized by comprising a rack-type connection system (44, 45) between the sliders (40) of the rear set of carriages (12A, 12B) supporting said first pushing members (15).

6. Bar feeding device according to Claim 1, characterized by comprising a first bar gripping device (46) for introduction of the rear end of a bar (14) into a second bar gripping device (15A) at the front end of the first bar pushing member (15) for removing a crop end portion of a bar from said second gripping device (15A).

7. Bar feeding device according to Claim 6, characterized by comprising support means for said first gripping device (46) movable parallely to and transversely with respect to the longitudinal axis of the feeding device.

8. Bar feeding device according to Claim 1, characterized by comprising separate control means (35, 39) for the first and second set of carriages (11, 12) respectively.

9. Bar feeding device according to Claim 8, characterized in that the control means for the second set of carriages (12A, 12B) comprise drive chains (38) and chain hooking means (52-53, 65) automatically engageable and disengageable from the drive chains (38).

10. Bar feeding device according to Claim 9, characterized in that fore front carriage (12B) of said second set (12A, 12B) is provided on each side with an automatic chain hooking device, comprising a pivotable cam member (52) provided with a wedged cam surface (52'), and a second cam member (53) having a wedged cam surface (53') rearwardly projecting from one side of the rear carriage (11A) of said first set of carriages (11A, 11B, 11C).

11. Bar feeding device according to Claim 1, characterized in that each carriage (11A, 11B, 11C) of the first set of carriages comprises an angularly orientable bar guide bush (56).

12. Bar feeding device according to Claim 11, characterized in that each carriage (11A, 11B, 11C) of said first set is provided with an automatic locking device for angularly locking the guide bush (56).

13. Bar feeding device according to Claim 12, characterized in that striking members (60, 63) are provided for engaging and disengaging the automatic locking device from the bar guide bushes (56).

14. Bar feeding device according to Claim 11, characterized in that each guide bush (56) comprises at least one annular bar support member (64).

15. Bar feeding device according to Claim 14, characterized in that said annular bar-support member (64) is rotatable.

16. Bar feeder according to Claim 14, characterized in that said annular bar-support member (64) comprises elastically yielding and wear-resistant plastic members.
